# EUROPEAN PATENT SPECIFICATION

(11) **EP 2 364 064 B1**
(45) Date of publication and mention of the grant of the patent: **11.05.2016**
(21) Application number: 11156066.0
(22) Date of filing: 25.02.2011
(51) Int. Cl.: H05B 33/08

(54) **LED lighting device**
LED-Beleuchtungsvorrichtung
Dispositif d'éclairage à DEL

(30) Priority: 03.03.2010 JP 2010046834
(43) Date of publication of application: 07.09.2011
(73) Proprietor: Panasonic Intellectual Property Management Co., Ltd., Osaka 540-6207 (JP)
(72) Inventor: Mizukawa, Hiromitsu, Osaka (JP); Kuroki, Yosifumi, Osaka (JP); Kumada, Kazuhiro, Hyogo (JP)
(74) Representative: Rüger, Rudolf

(56) References cited:
- DE-A1-102006 032 071
- JP-A- 2009 123 681

## Description

### [Field of the Invention]

The present invention relates to an LED lighting device capable of dimming.

### [Background Art]

Conventionally, there is an LED lighting device for performing dimming control with an LED (a light-emitting diode) as a light source. Dimming is performed by PWM control of variably controlling an on-duty state of an LED current (for example, refer to Patent Literature 1).

### [Conventional Technique Literature]

### [Patent Literature]

Patent Application Publication JP 2009 123 681 A1 shows an LED wherein, two different dimming scheme are used over two different part of the dimming range.

[Patent Literature1] JP 2009-301876 A

### [Disclosure of the Invention]

### [Problems to be solved by the Invention]

In a case where the dimming is performed by PWM control of an LED current, an ON period in which the LED current flows and an OFF period in which the LED current does not flow are alternately repeated in a predetermined cycle. As brightness is decreased (a dimming level is decreased), the ON period in which the LED current flows is shortened, and the OFF period in which the LED current does not flow is extended (that is, an on-duty state is shortened).

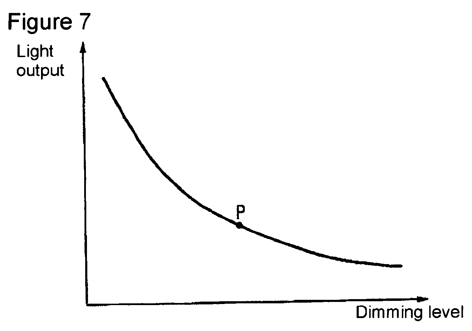

In general, as a dimming characteristic in a case where an LED light source is used, as shown in Fig. 7, the control is performed not as a straight line but adopting a dimming curve in which brightness is abruptly decreased at first and then gradually gently decreased, so as to realize a natural brightness decrease characteristic. It should be noted that the dimming curve is set to be a curve of square, cube or fourth power, or the like.

However, when the dimming level is decreased and the on-duty state of the LED current is shortened, human eyes perceive a flicker of light. Particularly, in a case where a light output is decreased in a curved shape in accordance with the decrease in the dimming level as shown in Fig. 7, an inflection point P of a change in the light output is provided at an intermediate level in which the dimming level is moved between a high level and a low level. Thus, the human eyes remarkably perceive the flicker of light.

The present invention is achieved in consideration with the above situation, and an object thereof is to provide an LED lighting device capable of suppressing the flicker at the intermediate level in which the dimming level is moved between the high level and the low level.

### [Means adapted to solve the Problems]

In order to solve the above problem, an LED lighting device according to a first aspect of the present invention for dimming an LED light-emitting part including one or more light-emitting diodes includes a constant current output part for variably adjusting an amplitude and supplying a first LED current with a fixed amplitude to the LED light-emitting part, and a PWM current output part for variably adjusting an on-duty state in a predetermined cycle by PWM control and supplying a second LED current with a predetermined on-duty state to the LED light-emitting part, wherein at a first dimming level or more, the PWM current output part fixes the on-duty state of the second LED current to a predetermined value and the constant current output part adjusts an amplitude of the first LED current in accordance with a dimming level, so that the LED light-emitting part is dimmed, at a second dimming level lower than the first dimming level or less, the constant current output part fixes the first LED current to a predetermined amplitude and the PWM current output part adjusts the on-duty state of the second LED current in accordance with the dimming level, so that the LED light-emitting part is dimmed, and between the first dimming level and the second dimming level, the constant current output part adjusts the amplitude of the first LED current in accordance with the dimming level and the PWM current output part adjusts the on-duty state of the second LED current in accordance with the dimming level, so that the LED light-emitting part is dimmed.

According to a second aspect, in the first aspect of the present invention, at a third dimming level lower than the second dimming level or less, in accordance with a decrease in the dimming level, the PWM current output part extends the predetermined cycle of the PWM control and reduces a peak value of the second LED current.

### [Effect of the Invention]

As described above, an effect of suppressing the flicker at the intermediate level in which the dimming level is moved between the high level and the low level can be obtained in the present invention.

### [Brief Description of the Drawings]

[Fig. 1] Fig. 1 is a circuit diagram showing a configuration of an LED lighting device of an embodiment.
[Fig. 2] Fig.2 (a) and (b) are waveform diagrams showing output currents of a constant current output part and a PWM output part.
[Fig. 3] Fig.3 is a characteristic diagram showing a relationship between a dimming level and a light output.
[Fig. 4] Figs. 4 (a) to (c) are waveform diagrams showing current waveforms in parts in a high dimming range.
[Fig. 5] Figs. 5 (a) to (c) are waveform diagrams showing current waveforms in the parts in an intermediate dimming range.
[Fig. 6] Figs. 6 (a) to (c) are waveform diagrams showing current waveforms in the parts in a low dimming range.
[Fig. 7] Fig. 7 is a diagram showing a dimming characteristic.

### [Best Mode for Carrying Out the Invention]

Hereinafter, an embodiment of the present invention will be described based on the drawings.

### (Embodiment)

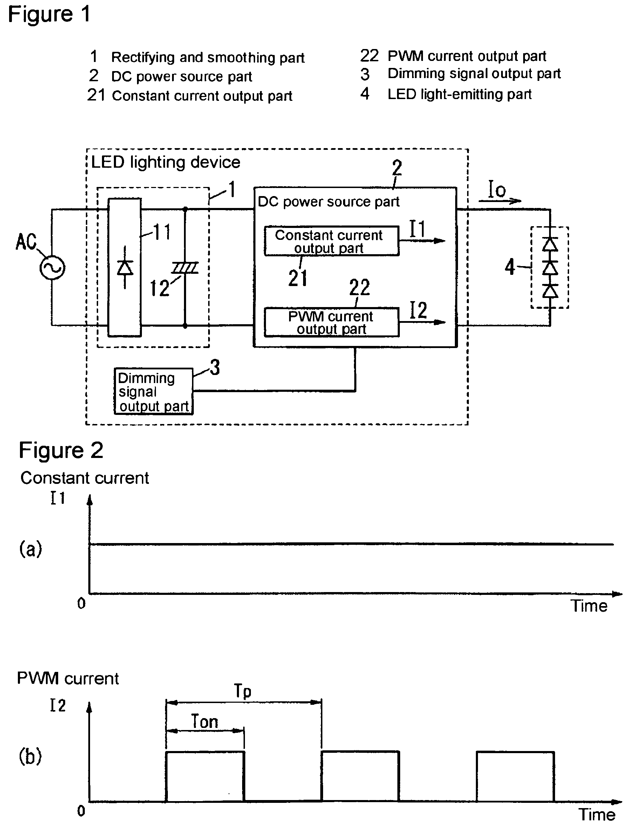

Fig. 1 shows a configuration of an LED lighting device of the present embodiment. The LED lighting device includes a rectifying and smoothing part 1, a DC power source part 2, and a dimming signal output part 3, and dimming control is performed by supplying an LED current I0 to an LED light-emitting part 4 including one or more light-emitting diodes.

The rectifying and smoothing part 1 is configured by a rectifying circuit 11 including a diode bridge for rectifying a commercial power source AC, and a capacitor 12 for smoothing a rectified output.

The DC power source part 2 takes a voltage in both ends of the capacitor 12 as an input power source, and includes a constant current output part 21 for outputting a constant current I1 (a first LED current), and a PWM current output part 22 for outputting a PWM current I2 (a second LED current). The LED current I0 which is the sum of the constant current I1 and the PWM current I2 is supplied to the LED light-emitting part 4.

The constant current output part 21 is capable of variably adjusting amplitude of the constant current I1 shown in Fig. 2 (a), and outputs the constant current I1 with a fixed amplitude in accordance with a dimming signal inputted from the dimming signal output part 3.

The PWM current output part 22 generates the PWM current I2 shown in Fig. 2 (b) by PWM control, and adjusts an on-duty state of the PWM current I2 in a PWM cycle Tp (about 50 Hz to 200 Hz) in accordance with the dimming signal inputted from the dimming signal output part 3. The on-duty state is expressed as "Ton/Tp" with the PWM cycle Tp and an ON period Ton.

The dimming signal output part 3 outputs the dimming signal with which a dimming level is set by operation of a user to the DC power source part 2. The dimming signal output part 3 may output a dimming signal received from an external dimmer via a network or an exclusive wire to the DC power source part 2. This dimming signal is formed by a pulse signal capable of varying a duty cycle, a pulse signal capable of varying a frequency, or the like.

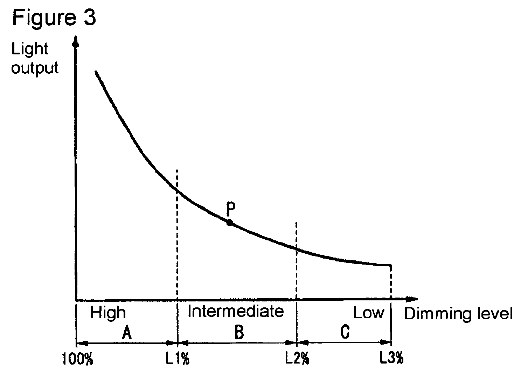

In the LED lighting device with the above configuration, dimming is performed along a dimming curve in which brightness is abruptly decreased at first and then gradually gently decreased as shown in Fig. 3, and different dimming operations are respectively performed in dimming ranges A, B, C corresponding to high, intermediate, and low dimming levels.

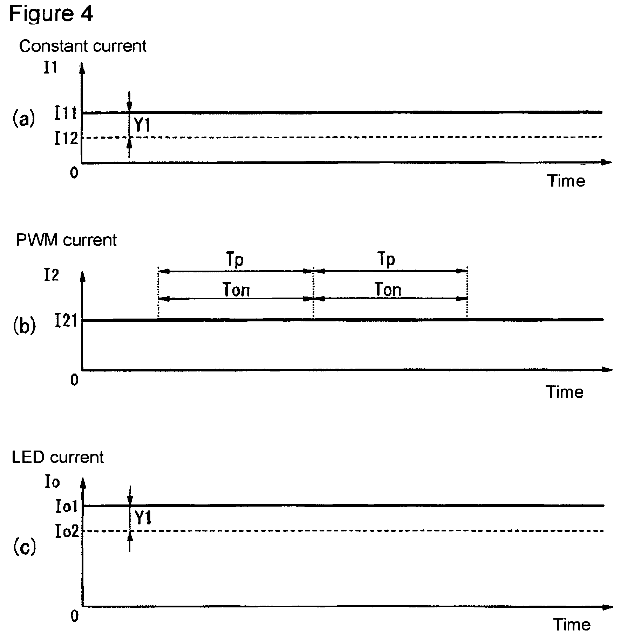

Firstly, the high dimming range A of the dimming level is a range in which the dimming level is L1 (%) (a first dimming level) or more and 100 (%) (full lighting) or less. In the high dimming range A, the PWM current output part 22 adjusts to realize "ON period Ton = PWM cycle Tp", and outputs the PWM current I2 with the fixed on-duty state of 100% (Fig. 4 (b)), and the constant current output part 21 adjusts the amplitude of the constant current I1 in accordance with the dimming level (Fig. 4 (a)). In this case, the constant current I1 is adjusted in accordance with the dimming level within an adjustment width Y1 from a maximum amplitude I11 to a predetermined amplitude I12 (0 < I12 < I11), and the PWM current I2 is a fixed value of the predetermined amplitude I21. Therefore, the LED current I0 (= I1 + I2) supplied to the LED light-emitting part 4 is, as shown in Fig. 4 (c), is a current adjusted in accordance with the dimming level within the adjustment width Y1 from a maximum amplitude I01 (= I11 + I21) to a predetermined amplitude (= I12 + I21). That is, the LED current I0 is a current with a fixed amplitude with which the amplitude is reduced in accordance with a decrease in the dimming level.

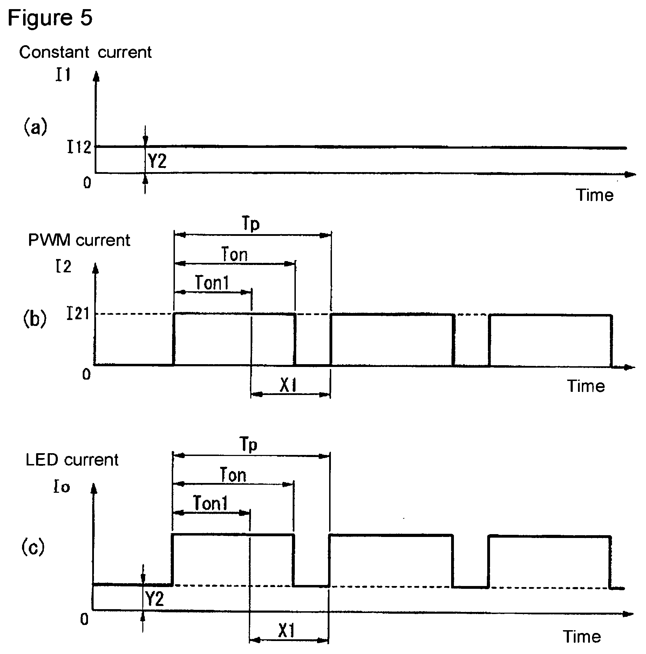

Next, the intermediate dimming range B of the dimming level is a range in which the dimming level is more than L2 (%) (a second dimming level) and less than L1 (%) (L2 < L1). In the intermediate dimming range B, the constant current output part 21 adjusts the amplitude of the constant current I1 in accordance with the dimming level (Fig. 5 (a)), and the PWM current output part 22 adjusts the on-duty state of the PWM current I2 in accordance with the dimming level (Fig. 5 (b)). In this case, the constant current I1 is adjusted in accordance with the dimming level within the adjustment width Y2 from the predetermined amplitude I12 to amplitude 0. That is, in the LED current I0 (I1 + I2) supplied to the LED light-emitting part 4, the constant current I1 can be regarded as an offset current which is reduced in accordance with the decrease in the dimming level. Further, the PWM current I2 is adjusted in accordance with the dimming level with the ON period Ton within an adjustment width X1 from the PWM cycle Tp to a predetermined ON period Ton1 (Ton1 < Tp). Therefore, the LED current I0 is, as shown in Fig. 5 (c), a waveform in which the PWM current I2 with the on-duty state reduced in accordance with the decrease in the dimming level is overlapped by the constant current I1 with an amplitude reduced in accordance with the decrease in the dimming level with a fixed PWM cycle Tp. At a lower limit of the intermediate dimming range B (the dimming level L2 (%)), the constant current I1 outputted by the constant current output part 21 has the amplitude 0, and the PWM current I2 outputted by the PWM current output part 22 has the peak value I21 and the ON period Ton1.

In such a way, in the intermediate dimming range B, not only the PWM control but also amplitude control is used to vary the LED current I0. Thus, a light output corresponding to the dimming level is obtained. That is, upon the decrease in the dimming level, not only the on-duty state of the LED current I0 is reduced but also an offset amount is reduced, so that a reduction amount of the on-duty state can be decreased as much as possible. Therefore, even in a case where an inflection point P of the dimming curve is provided in the intermediate dimming range B, a flicker of light perceived by human eyes can be suppressed.

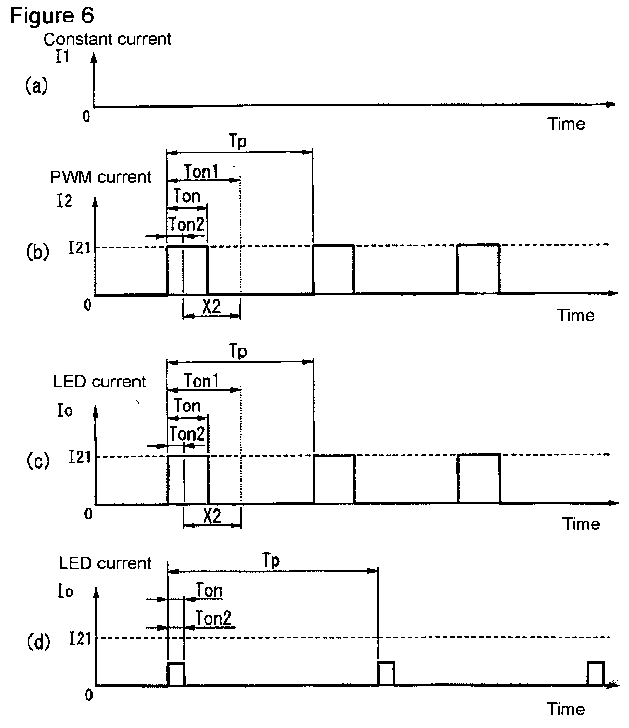

Next, the low dimming range C of the dimming level is a range in which the dimming level is L3 (%) or more and L2 (%) or less (L3 < L2). At an upper limit of the low dimming range C (the dimming level L2), the amplitude of the constant current I1 outputted by the constant current output part 21 is 0, and the PWM current I2 outputted by the PWM current output part 22 has the peak value I21 and the ON period Ton1. In the low dimming range C, the constant current output part 21 fixes the constant current I1 to the amplitude 0 (Fig. 6 (a)), and the PWM current output part 22 adjusts the on-duty state of the PWM current I2 in accordance with the dimming level (Fig. 6 (b)). In this case, the PWM current I2 is adjusted in accordance with the dimming level with the ON period Ton within adjustment width X2 from the ON period Ton1 to a minimum ON period Ton2 (Ton2 < Ton1). Therefore, the LED current I0 (= I1 + I2) supplied to the LED light-emitting part 4 is, as shown in Fig. 6 (c), a current of the peak value I21 with the on-duty state reduced in accordance with the decrease in the dimming level.

When the dimming level is decreased and the ON period Ton of the LED current I0 is reduced to the minimum ON period Ton2 (a third dimming level), the following operations are performed. The PWM current output part 22 fixes the ON period Ton of the PWM current I2 to the minimum ON period Ton2 responding to the further decrease in the dimming level, extends the PWM cycle Tp, further reduces the on-duty state, and reduces the peak value of the PWM current I2 from I21. Therefore, the LED current I0 (= I1 + I2) supplied to the LED light-emitting part 4 is, as shown in Fig. 6 (d), a current with the on-duty state and the peak value both reduced in accordance with the decrease in the dimming level. Thus, a dimming lower limit can be extended.

The PWM current output part 22 may fix the on-duty state of the PWM current I2 to a value other than 100% in the high dimming range A. Further, the constant current output part 21 may fix the amplitude of the constant current I1 to a value other than 0 in the low dimming range C.

### [Description of Reference Numerals]

1: Rectifying and smoothing part
2: DC power source part
21: Constant current output part
22: PWM current output part
3: Dimming signal output part
4: LED light-emitting part

## Claims

1. A LED lighting device for dimming an LED light-emitting part (4) including one or more light-emitting diodes, comprising:
a constant current output part (21) for variably adjusting amplitude and supplying a first LED current (I₁) with fixed amplitude to the LED light-emitting part (4) and
a PWM current output part (22) for variably adjusting an on-duty state in a predetermined cycle by PWM control and supplying a second LED current (I₂) with a predetermined on-duty state to the LED light-emitting part (4) wherein
at a first dimming level (L₁) or more, the PWM current output part (22) fixes the on-duty state of the second LED current (I₂) to a predetermined value and the constant current output part (21) adjusts the amplitude of the first LED current in accordance with the dimming level, so that the LED light-emitting part (4) is dimmed;
at a second dimming level (L₂) lower than the first dimming level or less, the constant current output part (21) fixes the first LED current (I₁) to a predetermined amplitude and the PWM current output part (22) adjusts the on-duty state of the second LED current (I₂) in accordance with the dimming level, so that the LED light-emitting part (4) is dimmed; and
between the first dimming level (L₁) and the second dimming level (L₂) the constant current output part (21) adjusts the amplitude of the first LED current (I₁) in accordance with the dimming level and the PWM current output part (22) adjusts the on-duty state of the second LED current (I₂) un accordance with the dimming level, so that the LED light-emitting part (4) is dimmed.

2. The LED lighting device according to claim 1, wherein
at a third dimming level lower (L₃) than the second dimming level (L₂) or less, in accordance with a decrease in the dimming level, the PWM current output part (22) extends the predetermined cycle of the PWM control and reduces a peak value of the second LED current (I₂).

## Patentansprüche

1. LED-Beleuchtungseinrichtung zum Dimmen eines LED-Lichtabstrahlteils (4), der eine oder mehrere Leuchtdioden enthält, aufweisend:
einen Konstantstromausgabeteil (21) zum variablen Einstellen einer Amplitude und Bereitstellen eines ersten LED-Stroms (I₁) mit einer festen Amplitude für den LED-Lichtabstrahlteil (4); und
einen PWM-Stromausgabeteil (22) zum variablen Einstellen des Einzustands in einem vorherbestimmten Zyklus durch die PWM-Steuerung und Bereitstellen eines zweiten LED-Stroms (I₂) mit einem vorherbestimmte Einzustand für den LED-Lichtabstrahlteil (4), wobei
bei einem ersten Dimmniveau (L1) oder mehr, der PWM-Stromausgabeteil (22) den Einzustand für den zweiten LED-Strom (I₂) auf einem vorherbestimmten Wert festhält und der Konstantstromausgabeteil (21) die Amplitude des ersten LED-Stroms in Übereinstimmung mit dem Dimmniveau einstellt, so dass der LED-Lichtabstrahlteil (4) gedimmt ist;
bei einem zweiten Dimmniveau (L2) unterhalb des ersten Dimmniveaus oder geringer, hält der Konstantstromausgabeteil (21) den ersten LED-Strom (I₁) auf einer vorherbestimmten Amplitude fest und der PWM-Stromausgabeteil (22) stellt den Einzustand des zweiten LED-Stroms (I₂) in Übereinstimmung mit dem Dimmniveau ein, so dass der LED-Lichtabstrahlteil (4) gedimmt ist; und
zwischen dem ersten Dimmniveau (L1) und dem zweiten Dimmniveau (L2) stellt der Konstantstromausgabeteil (21) die Amplitude des ersten LED-Stroms (I₁) in Übereinstimmung mit dem Dimmniveau ein und der PWM-Stromausgabeteil (22) stellt den Einzustand des zweiten LED-Stroms (I₂) in Übereinstimmung mit dem Dimmniveau ein, so dass der LED-Lichtabstrahlteil (4) gedimmt ist.

2. LED-Beleuchtungseinrichtung nach Anspruch 1, wobei der PWM-Stromausgabeteil (22) bei einem dritten Dimmniveau (L3) unterhalb des zweiten Dimmniveaus (L2) oder geringer, in Übereinstimmung mit der Abnahme des Dimmniveaus den vorherbestimmten Zyklus der PWM-Steuerung verlängert und einen Höchstwert des zweiten LED-Stroms (I₂) reduziert.

## Revendications

1. Dispositif d'éclairage à DEL pour atténuer une partie émettrice de lumière à DEL (4) incluant une ou plusieurs diodes électroluminescentes, comprenant :
une partie de sortie à courant constant (21) pour régler l'amplitude de façon variable et fournir à la partie émettrice de lumière à DEL (4) un premier courant de DEL (I₁) avec une amplitude fixe ; et
une partie de sortie de courant à PWM (22) pour régler de façon variable un état de service dans un cycle prédéterminé par commande par PWM et fournir à la partie émettrice de lumière à DEL (4) un second courant de DEL (I₂) avec un état de service prédéterminé, dans lequel
à un niveau supérieur ou égal à un premier niveau d'atténuation (L₁), la partie de sortie de courant à PWM (22) fixe l'état de service du second courant de DEL (I₂) a une valeur prédéterminée et la partie de sortie à courant constant (21) règle l'amplitude du premier courant de DEL en fonction du niveau d'atténuation, de façon à atténuer la partie émettrice de lumière à DEL (4) ;
à un deuxième niveau d'atténuation (L₂) inférieur au premier niveau d'atténuation, la partie de sortie à courant constant (21) fixe le premier courant de DEL (I₁) a une amplitude prédéterminée et la partie de sortie de courant à PWM (22) règle l'état de service du second courant de DEL (I₂) en fonction du niveau d'atténuation, de façon à atténuer la partie émettrice de lumière à DEL (4) ; et
entre le premier niveau d'atténuation (L₁) et le deuxième niveau d'atténuation (L₂), la partie de sortie à courant constant (21) règle l'amplitude du premier courant de DEL (I₁) en fonction du niveau d'atténuation et la partie de sortie de courant à PWM (22) règle l'état de service du second courant de DEL (I₂) en fonction du niveau d'atténuation, de façon à atténuer la partie émettrice de lumière à DEL (4).

2. Dispositif d'éclairage à DEL selon la revendication 1, dans lequel
à un troisième niveau d'atténuation (L₃) inférieur au deuxième niveau d'atténuation (L₂), en fonction de la diminution du niveau d'atténuation, la partie de sortie de courant à PWM (22) prolonge le cycle prédéterminé de la commande à PWM et diminue la valeur de crête du second courant de DEL (I₂).
